# EUROPEAN PATENT APPLICATION

(11) **EP 2 175 678 A1**
(43) Date of publication of application: **14.04.2010**
(21) Application number: 08841134.3
(22) Date of filing: 16.10.2008
(51) Int. Cl.: H04W 28/16

(54) **A RESOURCE AND ADMISSION CONTROL METHOD AND A RESOURCE AND ADMISSION CONTROL SUB-SYSTEM**

(30) Priority: 19.10.2007 CN 200710163345
(71) Applicant: ZTE Corporation, Shenzhen, Guangdong 518057 (CN)
(72) Inventor: YOU, Jianjie, Guangdong 518057 (CN); GU, Zhongyu, Guangdong 518057 (CN)
(74) Representative: Howson, Richard G.B.
(86) International application number: PCT/CN2008/072724
(87) International publication number: WO 2009/052751

(57) **Abstract**

A resource and admission control method and a resource and admission control sub-system are provided in the present invention. The method is: the subscription information during the subscription process between a user and a network attachment sub-system including: an adaptive Quality of Service (QoS) parameter of a media type or a service, the adaptive QoS parameter representing the maximum value for the resource and admission control sub-system regulating the resource occupancy of the media type or the service; during the process of the resource and admission control, when the current resource cannot satisfy the service resource request initiated by the user, the resource and admission control sub-system judges whether to regulate the resource occupancy of the media type or the service to satisfy the resource request according to the adaptive QoS parameters of the various different media types or services included in the user session; in the case of the judging result being 'yes', the resource and admission control sub-system reduces the resource occupancy of the media type or the service with the adaptive QoS parameter from low to high according to the priority of the media type or the service and accepts the resource request, otherwise rejects the resource request.

## Description

### TECHNICAL FIELD

The present invention relates to the field of communications, especially to a resource and admission control method and a resource and admission control sub-system of Quality of Service (QoS) for the adaptive regulation service of the resource and admission control sub-system in the next generation network.

### BACKGROUND

A Next Generation Network (NGN) adopts packet technologies such as IP packet technology and so on, which acts as a bearer network technology to converge the fixed communications and mobile communications. The NGN can provide more plentiful multi-media services, which put forward a higher requirement of the Quality of Service (QoS) for the user service.

The resource and admission control is a new concept introduced in the NGN. It locates between a service control layer and a bearer transport layer. Through applying the resource and admission control, it can shield the details of a transport network to the upward service layer, and thus can support separating service control from the transport function; to the downward, it can perceive the service condition of the resources occupancy in the transport network. Through the admission and resource control, making use of the resources in the transport network properly and reasonably, to ensure the QoS for the services and prevent occurring the phenomenon that the bandwidth and the services are misappropriated.

The International Telecommunication Union Telecommunication Standardization Sector (ITU-T) and Telecommunication and Internet converged Services and Protocols for Advanced Networking (TISPAN) as an European Organization for Standardization have built their own research group separately, and devoted to the formulation of NGN technical standards. They have put forward a Resource and Admission Control Function (RACF) and a Resource and Admission Control Sub-system (RACS) to solve the problem of the QoS for the NGN bearer network.

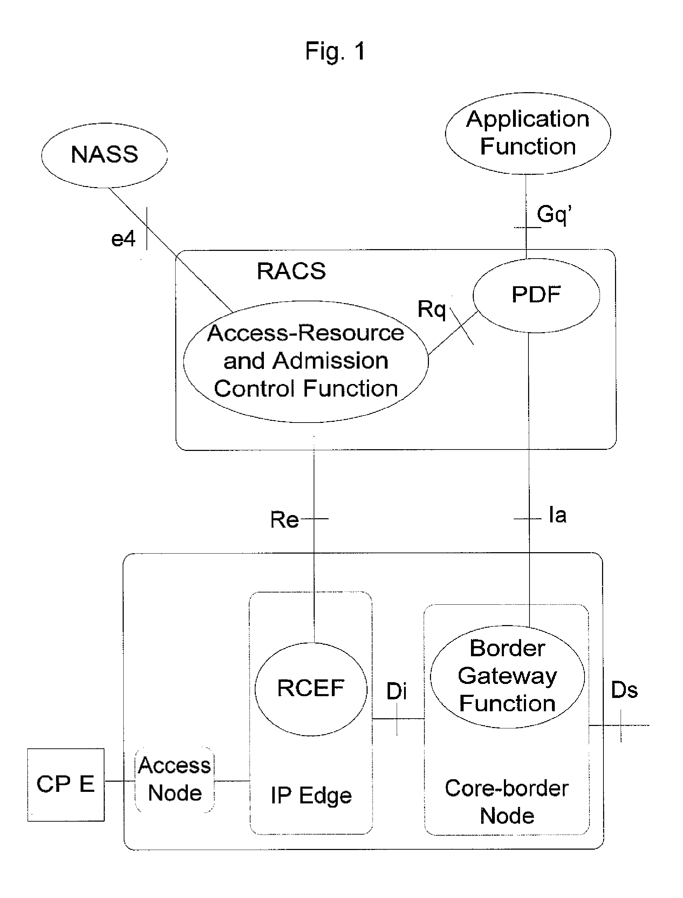

The functional structure of the TISPAN RACS is shown in Fig. 1. The resource requirement of the service layer is associated with the resource allocation of the network bearer layer by the RACS, which is primary to complete the functions such as: policy control, resource reservation, admission control, Network Address Translation (NAT) and the firewall traversal and so on. Through a series of strategies, the RACS provides the control service based on the transmission for the application, thus user terminals can achieve the necessary services.

The RACS is composed of two entities: a Service-based Policy Decision Function (SPDF) and an Access-Resource and Admission Control Function (A-RACF). The detailed description will be given to the two entities hereinafter.

### (1) SPDF

The SPDF provides a uniform interface to the application layer, shields the underlying network topology and specific access types, and provides service-based policy control. According to the request of an Application Function (AF), the SPDF chooses a local policy, and maps the request into IP QoS parameters, which are sent to the A-RACF and a Border Gateway Function (BGF) to request the corresponding resource.

### (2) A-RACF

The A-RACF locates at an access network, and has an admission control function and a network policy convergence function. The A-RACF receives the request from the SPDF, and then achieves the admission control based on the saved policy, and accepts or refuses the requests of transmission resources. Through the 'e4' reference point, the A-RACF obtains network attachment information and user QoS inventory information from a Network Attachment Sub-System (NASS), determining the available network resources according to network location information (e.g. the address of the accessed user's physical node), and refers to the user QoS inventory information while in dealing with the requests of the allocation of resources.

A transport layer comprises three kinds of functional entities: the BGF, a Resource Control Enforcement Function (RCEF) and a Layer 2 Termination Function (L2TF). The three entities will be illustrated in detail hereinafter.

### (1) BGF

The BGF is a packet-to-packet gateway. It can be located between the access network and a core network (achieving a core-border gateway function). It can also be located between two core networks (achieving an internet-border gateway function). Under the control of the SPDF, the BGF completes the functions of NAT, gating, QoS marking, bandwidth limiting, using measurement and resources synchronizing.

### (2) RCEF

The RCEF carries out the Layer 2/Layer 3 (L2/L3) media stream policy defined by access operator and transmitted by the A-RACF through 'Re' reference point, so as to complete the functions of gating, QoS marking, and bandwidth limiting etc.

### (3) L2TF

The L2TF is a functional entity which terminates Layer 2 connection in the access network. The RCEF and the L2TF are two different functional entities which being achieved together in the physical device IP edge.

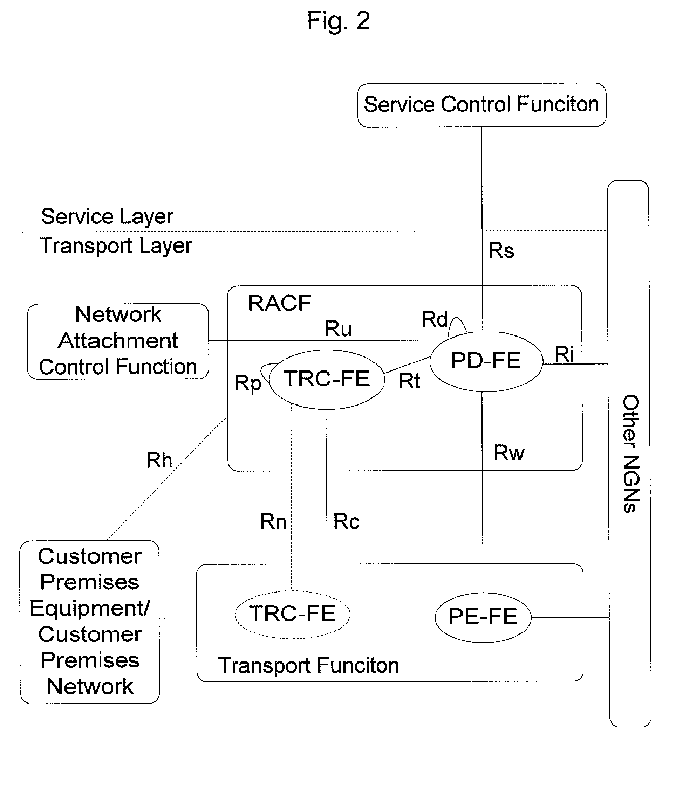

In the latest draft about RACF published by the ITU-T in April 2007, it provides a functional framework of the RACF, as shown in Fig. 2, including the following entities: PD-FE, TRC-FE, PE-FE and TRE-FE, which will be described separately hereinafter.

The PD-FE is a policy decision functional entity. It can make initial QoS resource decision according to media stream session information (receiving from SCF (Service Control Function) through 'Rs' interface) and subscription information (receiving from NACF (Network Access Configuration Function) through 'Ru' interface) of user's transport resources, and then interact with the TRC-FE to confirm whether there are sufficient QoS resources. Finally it makes a final decision which is distributed to the PE-FE to implement.

The TRC-FE is a transport resource control functional entity. It is mainly responsible for resource control, monitors network resources, collects relevant information, and gives a response depending on the specific resource situation while the PD-FE requests resources.

The PE-FE is a policy enforcement functional entity. It mainly implements the policy control (gating, bandwidth, traffic classification and marking, traffic shaping, Layer 2/Layer 3 QoS mapping, collecting and reporting the use of information resources occupancy, etc.) under the guidance of the PD-FE.

The TRE-FE is a transport resource implementation functional entity. It mainly implements Layer 2 policy under the guidance of the TRC-FE according to the current description of the TRE-FE protocol. But its specific function and scope have not been determined.

In the resource and admission control sub-system, for resource and admission control of service QoS, the method currently used is: according to the user's subscription information, doing the resource and admission control for user applied services; when the current resource situation cannot satisfy service request initiated by the user, the resource and admission control sub-system can regulate the resource occupancy situation of currently normally operated services to satisfy the request. When the currently normally operated services are too many and are with different types, it is very complex to regulate the resource occupancy situation of the services reasonably and effectively, and there are also definite difficulties in practical implementation.

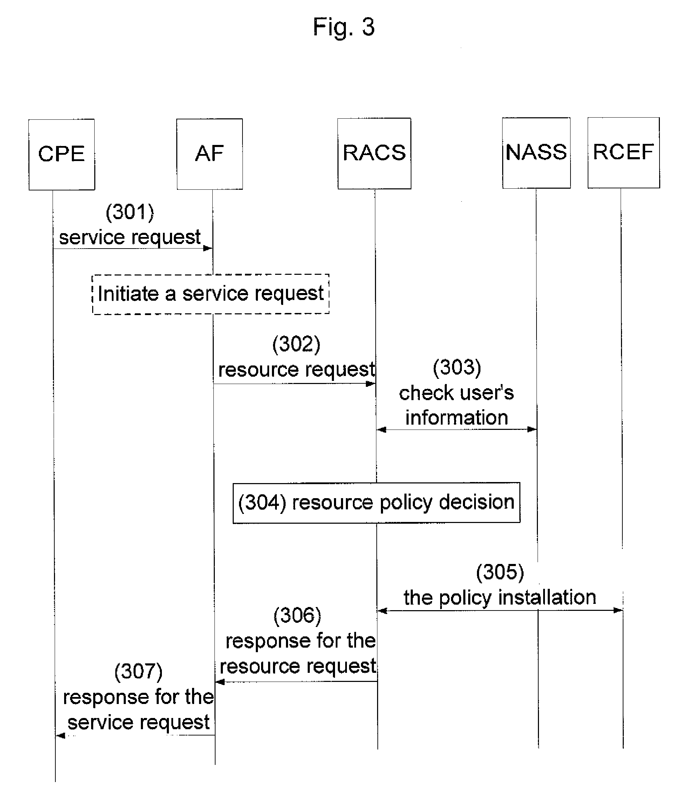

Fig. 3 is a flowchart of the resource and admission control based on the existing technology. As shown in Fig. 3, including the following steps:
301, a CPE (Customer Premises Equipment) initiates service request, and sends the request information to an AF (Application Function), then trigs the AF to generate a resource initializing request;
302, the AF sends a resource request message to the RACS;
303, after receiving the resource request message, the RACS interacts with the NASS, and checks the user's subscription information;
304, the RACS does the resource and admission control according to the received user's information;
305, the RCEF does the policy installation;
306, the RACS sends a response for resource request to the AF; and
307, the AF sends a response for service request to the CPE.
   Wherein, the mainly idea of the step 304 is: if the current resources cannot satisfy the service request initiated by the user, then the currently operating service resources being regulated to satisfy the resource request of the user's new service. But according to the current technologies, there isn't a related description about how to regulate the currently operating services reasonably and effectively.

### SUMMARY

Considering that there is a problem that no method of regulating resource occupancy situation of currently operating media types and services during the course of the resource and admission control in the relevant technology, the present invention is put forward. Therefore, the present invention is intended to provide a resource and admission control method and a resource and admission control sub-system, which is used for the resource and admission control sub-system adaptive regulating the QoS for the media types or the services.

According to one aspect of the present invention, it provides a resource and admission control method, which includes the following processes: the subscription information comprises adaptive Quality of Service (QoS) parameters of various different media types or services during a subscription process between a user and a network attachment sub-system. Wherein, the adaptive QoS parameters represent the maximum values for the resource and admission control sub-system regulating the resource occupancies of the various different media types or services; and during the process of the resource and admission control, if the current resource cannot satisfy the resource request initiated by the user, the resource and admission control sub-system judges whether to regulate the resource occupancy of some media types or services to satisfy the resource request according to the adaptive QoS parameter of the various different media types or services included in the user session. In the case of the judging result being 'yes', the resource occupancy of the media type or the service with the adaptive QoS parameter is reduced from low to high according to the priority of the media type or the service, and the resource request is accepted; otherwise, the resource request is rejected.

Wherein, the resource and admission control sub-system may get the adaptive QoS parameter from the network attachment sub-system in the process of the resource and admission control. Or, the network attachment sub-system may send the adaptive QoS parameter to the resource and admission control sub-system during the subscription process. Thus, the resource occupancy of the media type or the service reduced by the resource and admission control sub-system may be less than or equal to the resource occupancy of the media type or the service represented by the adaptive QoS parameter.

While the resource and admission control sub-system reduces the resource occupancy of the media type or the service, if there is released resource, the resource and admission control sub-system may increase the reduced resource occupancy of the media type or the service.

If the resource and admission control sub-system regulates the resource occupancy of the media type or the service in a process of the resource and admission control, then it will record the regulation situation and feedback the regulation situation to the network attachment sub-system.

Furthermore, during the subscription process, the regulated QoS parameter of the media type or the service may be further included in the subscription information of the user. Wherein, the regulated QoS parameter of the media type or the service may represent the regulated resource occupancy of the media type or the service, and the parameter may be less than or equal to the adaptive QoS parameter.

According to another aspect of the present invention, it provides a resource and admission control sub-system, including: an acquisition module is used for receiving adaptive QoS parameters of the various different media types or services in subscription information, wherein, the adaptive QoS parameters represent the maximum values for the resource and admission control sub-system regulating the resource occupancies of the various different media types or services; a decision module is used for judging whether to regulate the resource occupancy of the media types or the services to satisfy the resource request according to the adaptive QoS parameters of the various different media types or services in the acquisition module; a processing module is used for reducing the resource occupancy of the media type or the service with the adaptive QoS parameter from low to high according to the priority of the media type or the service, and accepting the resource request in the case of the judging result of the decision module being 'yes', otherwise, rejecting the resource request.

Thus, through the resource and admission control method provided by the present invention, adaptively regulating the QoS for the media type or the service can be achieved in the next generation network, so as to satisfy the user's service resource request.

The other characteristics and advantages of the present invention will be set forth in the following description, and some of which become apparent in the description, or will be learned about through the implementation of the present invention. The other advantages and destination of the present invention can be achieved and obtained from the detailed description, claims and structure particularly pointed out in drawings.

### BRIEF DESCRIPTION OF THE DRAWINGS

The drawings are used to provide a better understanding of the present invention, and are a part of the description, and the drawings are used to explain the present invention together with embodiments of the present invention, but, which don't constitute the restrictions of the present invention. In the drawings:
Fig. 1 is a functional structure chart of the RACS of the TISPAN according to relevant technologies;
Fig. 2 is a functional structure chart of the RACF of the ITU-T according to relevant technologies;
Fig. 3 is a flow chart of the resource and admission control method based on the relevant technologies;
Fig. 4 is a flow chart of the resource and admission control method according to an embodiment of the present invention;
Fig. 5 is a flow chart illustrating the user subscription process of a case 1 based on the resource and admission control method according to the embodiment of the present invention;
Fig. 6 is a flow chart illustrating a process of the resource and admission control of the case 1 based on the resource and admission control method according to the embodiment of the present invention;
Fig. 7 is a flow chart illustrating the user subscription process of a case 2 based on the resource and admission control method according to an embodiment of the present invention;
Fig. 8 is a flow chart illustrating a process of the resource and admission control of the case 2 based on the resource and admission control method according to the embodiment of the present invention; and
Fig. 9 is a block diagram illustrating the resource and admission control sub-system according to an equipment embodiment of the present invention.

### DETAILED DESCRIPTION

### Functional Overview

A resource and admission control method is provided in embodiments of the present invention. The method is used for an RACS to adaptively regulate QoS for a media type or a service. In the method, if a user initiates a new resource request, the RACS would adaptively regulate the resource request of the media type or the service according to the user's subscription information while the current resource is not satisfied, and carry out the resource and admission control on the premise that to some extent it can guarantee the QoS for the current user session. Through the embodiments of the present invention, they provide a technical program which resolves the problem about solution approach for regulating the resource occupancy situation of the currently operating media type or the service not being supplied during the process of the resource and admission control in relevant technologies. Then it can achieve adaptively regulating for the QoS for the media type or the service to satisfy the user's resource request in the next generation network.

With reference to the drawings, the exemplary embodiments of the present invention will be illustrated hereinafter. It should be understood that the exemplary embodiments herein are only to describe and explain the present invention, but not to limit the present invention.

### Method Embodiment

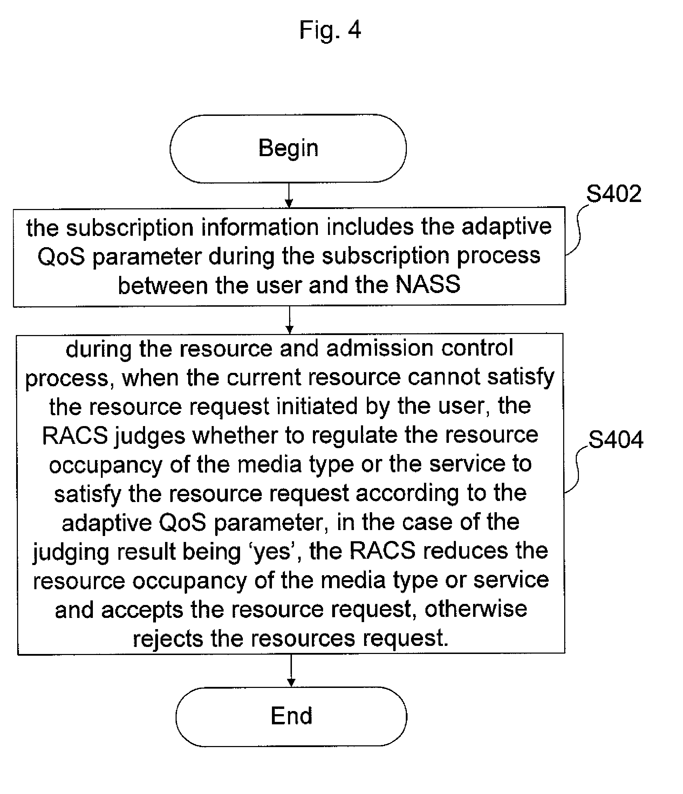

The embodiment provides a resource and admission control method, as shown in Fig. 4, the resource and admission control method comprises the following steps:
step S402 (the subscription process): subscription information comprises an adaptive QoS parameter during a subscription process between a user and an NASS (Network Attachment Sub-System);
   wherein, the adaptive QoS parameter represents the maximum value for an RACS regulating the resource occupancy of the media type or the service; as long as the regulated resource occupancy is less than or equal to the maximum value, all the situations are permitted. The premise to define the parameter is not to terminate the media type or the service, and not to have great effect on the QoS for the media type and the service; and
step S404 (the process of the resource and admission control): during the process of the resource and admission control, when the current resource cannot satisfy the resource request initiated by the user, the RACS judges whether to regulate the resource occupancy of the media type or the service to satisfy the resource request according to the adaptive QoS parameter, in the case of the judging result being 'yes', the RACS reduces the resource occupancy of the media type or the service with the adaptive QoS parameter from low to high according to the priority of the media type or the service (the specifically reduced amount is determined by the user's subscription information, that is, the adaptive QoS parameters and use situation of the current resources), and accepts the resource request, otherwise, the RACS rejects the resources request.

It can be seen from the above description, the resource occupancy of the media type or the service which being reduced by the RACS should be less than or equal to the resource occupancy (the maximum value) of the media type or the service which being represented by the adaptive QoS parameter.

After reducing the resource occupancy of the media type or the service, if there is released resource, then the RACS may improve the reduced resource occupancy of the media type or the service.

If the resource and admission control sub-system regulated the resource occupancy of the media type or the service in a process of the resource and admission control, then the resource and admission control sub-system will record the regulation situation.

Preferably, during the subscription process, the regulated QoS parameter of the media type or the service is further included in the subscription information of the user. Wherein, the regulated QoS parameter of the media type or the service represents the regulated resource occupancy of the media type or the service. Furthermore, the parameter should be less than or equal to the above adaptive QoS parameter.

In addition, there are two methods to get the adaptive QoS parameter: Method 1, the RACS can get the adaptive QoS parameter from the NASS in a process of the resource and admission control; and Method 2, the NASS can send the adaptive QoS parameter to the RACS during the subscription process.

For the above-mentioned two methods and with reference to cases, the present invention will be further described hereinafter.

Case 1: an RACS gets an adaptive QoS parameter from an NASS in a process of the resource and admission control.

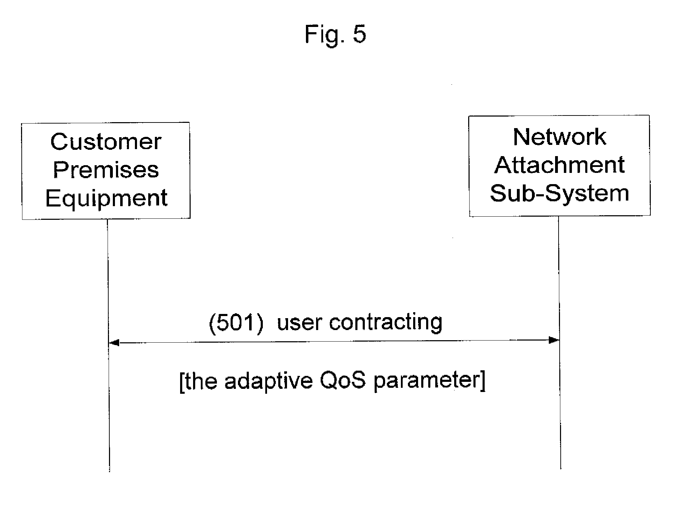

Wherein, Fig. 5 shows the subscription process (equivalent to the above step S402) of the case 1, as shown in Fig. 5, including:

501: a user contracts with the NASS. During the subscription process, the subscription information should comprise the adaptive QoS parameter.

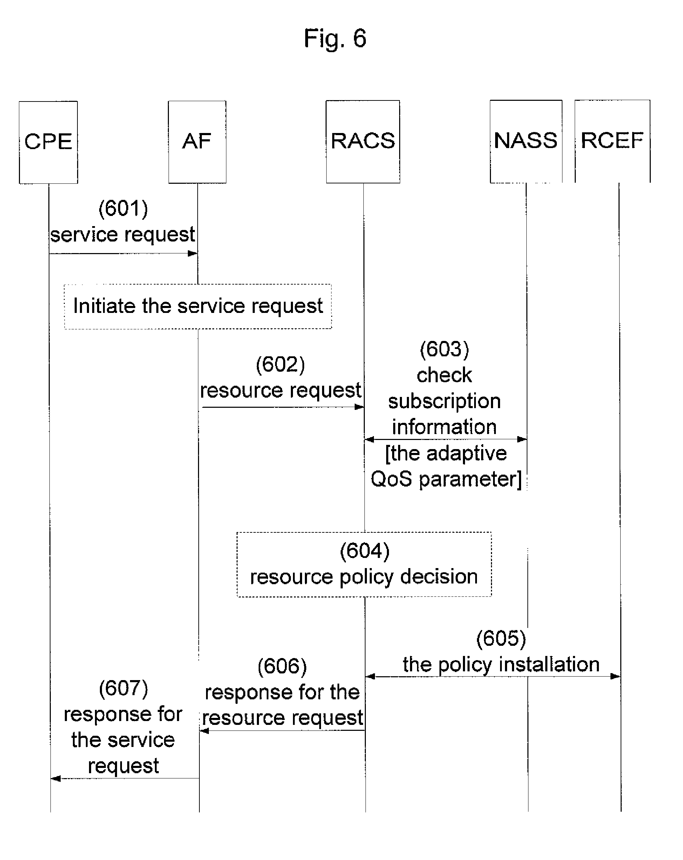

Fig. 6 shows a process of the resource and admission control (equivalent to the above step S404) of the case 1, as shown in Fig. 6, including:
601: a CPE initiates a service request, and sends the request message to an AF, and then triggers the AF to generate a resource initializing request;
602: the AF sends a resource request message to the RACS;
603: After receiving the resource request message, the RACS interacts with the NASS, inquiries the user's subscription information, and obtains the adaptive QoS parameter from the information;
604: the RACS makes a resource decision according to the obtained user's subscription information. Specifically, the RACS accepts the request if the current resource can satisfy the resource request of the user's session; while the current resource cannot satisfy the resource request of the user's session, the RACS checks the adaptive QoS parameters of the various different media types or services of the user's session; If the resource request can satisfied by regulating the adaptive QoS parameter, then the RACS does the regulation and accepts the resource request, if the resource request cannot be satisfied, then the RACS rejects the resource request;
605: the RCEF does a policy installation;
606: the RACS sends a resource request response message to the AF, if the resource of the media type or the service is regulated, the regulation situation should also be sent to the AF; and
607: the AF sends a service request response message to the CPE.

Case 2: an NASS sends an adaptive QoS parameter to an RACS during a subscription process.

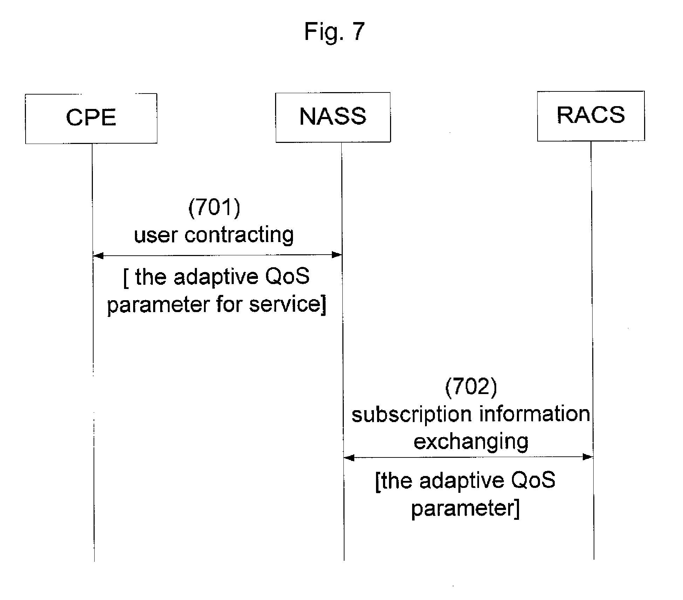

Wherein, Fig. 7 shows the subscription process (equivalent to the above step S402) of the case 2, as shown in Fig. 7, including:
701: a subscription process between a user and the NASS. During the subscription process, the subscription information should include the adaptive QoS parameter; and
702: the NASS sends the user's subscription information to the RACS initiatively.

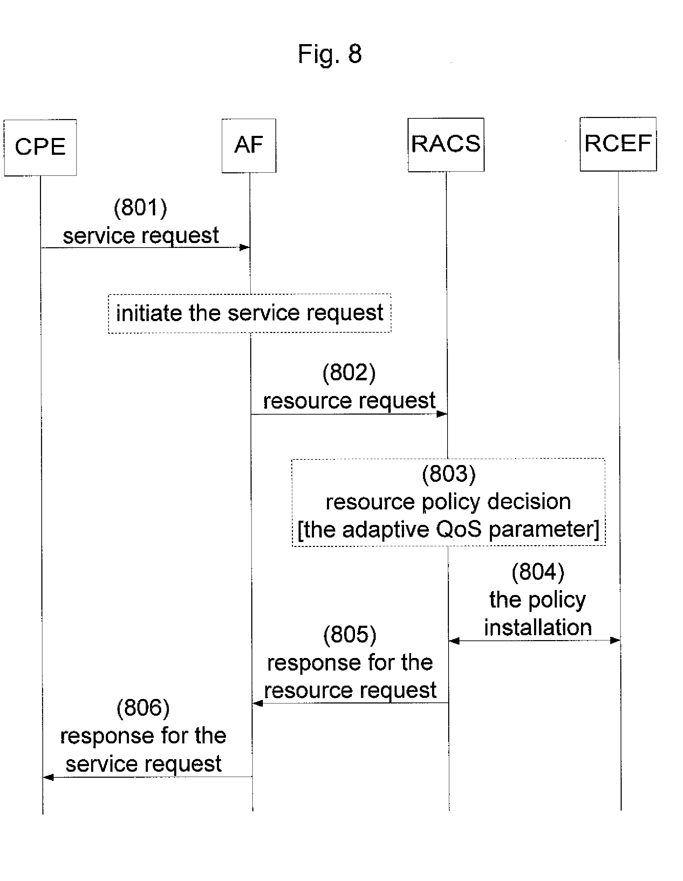

Fig. 8 shows a process of the resource and admission control (equivalent to the above step S404) of the case 2, as shown in Fig. 8,including:
801: a CPE initiates a service request, and sends a request message to an AF, and then triggers the AF to generate a resource initializing request;
802: the AF sends a resource request message to the RACS;
803: the RACS makes the resource decision according to the user's subscription information which comprises the adaptive QoS parameter. Specifically, the RACS accepts the request if the current resource can satisfy the resource request of the user's session; while the current resource cannot satisfy the resource request of the user's session, the RACS inquiries the adaptive QoS parameters of the various different media types or services of the user's session, if the resource request can be satisfied by regulating the adaptive QoS parameter, then the RACS does the regulation and accepts the resource request, if the resource request cannot be satisfied, rejects the resource request;
804: the RCEF does a policy installation;
805: the RACS sends a resource request response message to the AF, if the resource of the media type or the service being regulated, the regulation situation should also be sent to the AF; and
806: the AF sends a service request response message to the CPE.

Thus, through the resource and admission control method provided by the present invention, adaptively regulating the QoS for the media type or the service can be achieved in the next generation network, so as to satisfy the user's resource request.

### Equipment Embodiment

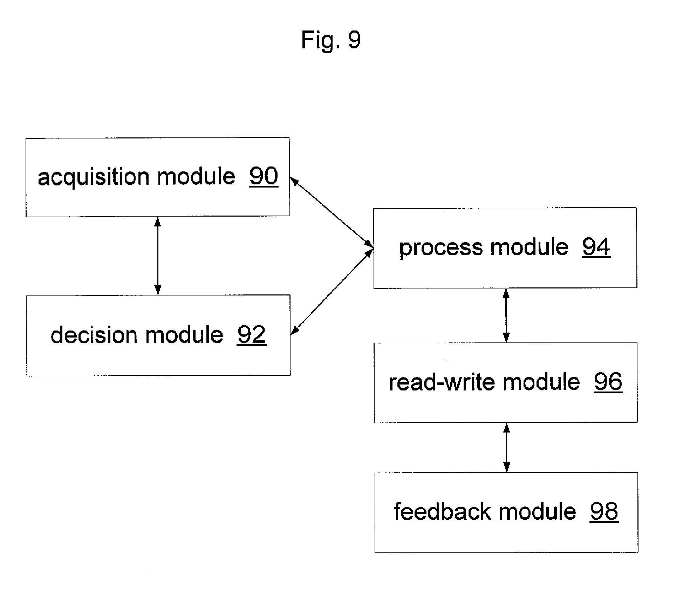

The embodiment provides a resource and admission control sub-system to achieve the above-mentioned method, as shown in Fig. 9, the resource and admission control sub-system includes: an acquisition module 90, a decision module 92 and a processing module 94, which will be described in detail with reference to Fig. 9 hereinafter.

The acquisition module 90 is used to receive adaptive QoS parameters of the various different media types or services in subscription information, wherein, the adaptive QoS parameters represent the maximum values for the resource and admission control sub-system regulating the resource occupancies of the various different media types or services.

Specifically, the adaptive QoS parameters of the various different media types and services are further included in the subscription information during a subscription process between the user and the NASS, the descriptions of the adaptive QoS parameters are similar with that in the above method embodiments, so they are no longer discussed here. The acquisition module 90 firstly receives the adaptive QoS parameters of the various different media types or services. There are two methods for the receiving. The detailed descriptions are similar with the above method embodiments, so they are no longer discussed here.

The decision module 92, connected with the acquisition module 90, is used for judging whether to regulate the resource occupancy of the media type or the service to satisfy the resource request according to the adaptive QoS parameters of the various different media types or services in the acquisition module 90.

The processing module 94, connected with the acquisition module 90 and the decision module 92, is used for reducing the resource occupancy of the media type or the service with the adaptive QoS parameter from low to high according to the priority of the media type or the service in the acquisition module 90, and accepting the resource request in the case of the judging result in the decision module 92 being 'yes', otherwise rejecting the resource request.

Specifically, during the process of the resource and admission control, when the current resource cannot satisfy the resource request initiated by the user, the RACS judges whether to regulate the resource occupancy of the media type or the service to satisfy the resource request according to the obtained adaptive QoS parameter, in the case of the judging result being 'yes', the RACS reduces the resource occupancy of the media type or the service with the adaptive QoS parameter from low to high according to the priority of the media type or the service (the specifically reduced amount is determined by the user's subscription information, that is, the adaptive QoS parameter and use situation of the current resource), and accepts the resource request, otherwise rejects the resources request.

Preferred, the above-mentioned system also includes: a read-write module 96 and a feedback module 98. Wherein:
the read-write module 96, connected to the process module 94, is used for recording the situation of regulating the resource occupancy of the media type or service. Specifically, the resource and admission sub-system will record the situation of regulating the resource occupancy of the media type or the service if regulating the resource occupancy of the media type or service in the process of the resource and admission control.

The feedback module 98, connected to the read-write module 96, is used for sending the resource occupancy situation which is recorded by the read-write module 96 to the network attachment sub-system.

Specifically, the read-write module 96 will send the regulation situation to the network attachment sub-system after recoding the regulation situation.

To sum up, adaptively regulating the QoS for the media type or the service can be achieved by the present invention in the next generation network, so as to satisfy the user's resource request.

The present invention is not limited to the above described exemplary embodiments. For those skilled in the art, various modifications and changes can be made to the present invention. Any modification, equivalent substitute and improvement within the spirit of the present invention are deemed to be included within the scope of the present invention, as defined by the claims.

## Claims

1. A resource and admission control method, is used for a resource and admission control sub-system adaptively regulating QoS for media types or services, the method comprising the following processing:
during a subscription process between a user and a network attachment sub-system, subscription information including adaptive QoS parameters of various different media types or services, wherein, the adaptive QoS parameters representing maximum values for the resource and admission control sub-system regulating the resource occupancies of the various different media types or services; and
during a process of the resource and admission control, when the current resource cannot satisfy the resource request initiated by the user, the resource and admission control sub-system judging whether to regulate the resource occupancy of the media types or services to satisfy the resource request according to the adaptive QoS parameters of the various different media types or services included in the user session, in the case of the judging result being 'yes', reducing the resource occupancy of the media type or the service with the adaptive QoS parameter from low to high according to the priority of the media type or the service and accepting the resource request, otherwise rejecting the resource request.

2. The method according to claim 1, wherein, the resource and admission control sub-system obtains the adaptive QoS parameter from the network attachment sub-system in the process of the resource and admission control.

3. The method according to claim 1, wherein, the network attachment sub-system sends the adaptive QoS parameter to the resource and admission control sub-system during the subscription process.

4. The method according to claim 2 or 3, wherein, the resource occupancy of the media type or the service reduced by the resource and admission control sub-system is less than or equal to the resource occupancy of the media type or the service represented by the adaptive QoS parameter.

5. The method according to claim 2 or 3, wherein after the resource and admission control sub-system reduces the resource occupancy of the media type or the service, if there is released resource, then the resource and admission control sub-system increases the reduced resource occupancy of the media type or the service.

6. The method according to claim 2 or 3, wherein, if the resource and admission control sub-system regulates the resource occupancy of the media type or the service in the process of the resource and admission control, then the resource and admission control sub-system will record the regulation situation and feedback the regulation situation to the network attachment sub-system.

7. The method according to claim 2 or 3, wherein, during the subscription process, the regulated QoS parameter of the media type or the service is further included in the subscription information of the user; wherein, the regulated QoS parameter of the media type or the service represents the regulated resource occupancy of the media type or the service.

8. The method according to claim 6, wherein, the regulated QoS parameter of the media type or the service is less than or equal to the adaptive QoS parameter.

9. A resource and admission control sub-system, including:
an acquisition module, being used for receiving adaptive QoS parameters of various different media types or services in subscription information, wherein, the adaptive QoS parameters representing maximum values for the resource and admission control sub-system regulating the resource occupancies of the various different media types or services;
a decision module, being used for judging whether to regulate the resource occupancy of the media types or the services according to the adaptive COOS parameters of the various different media types or services in the acquisition module, so as to satisfy the resource request; and
a processing module, being used for reducing the resource occupancy of the media type or the service with the adaptive QoS parameter from low to high according to the priority of the media type or the service and accepting the resource request in the case of the judging result of the decision module being 'yes', otherwise rejecting the resource request.

10. The system according to claim 9, the system also including:
a read-write module, being used for recording the situation of regulating the resource occupancy of the media type or the service while the resource and admission control sub-system regulating the resource occupancy of the media type or the service in a process of the resource and admission control; and
a feedback module, being used for sending the resource occupancy situation recorded by the read-write module to a network attachment sub-system.
